# EUROPEAN PATENT SPECIFICATION

(11) **EP 0 579 477 B1**
(45) Date of publication and mention of the grant of the patent: **01.10.1997**
(21) Application number: 93305472.8
(22) Date of filing: 13.07.1993
(51) Int. Cl.: B26D 1/20, B41J 11/70, B26D 7/18

(54) **Paper cutting device using a movable cutting wheel**
Papierschneidgerät mit beweglichem Rundmesser
Dispositif de coupe pour papier ayant un disque de coupe mobile

(30) Priority: 14.07.1992 JP 186397/92
(43) Date of publication of application: 19.01.1994
(73) Proprietor: NEC CORPORATION, Tokyo (JP)
(72) Inventor: Murakami, Fuminori, c/o NEC Eng. Ltd., Minato-ku, Tokyo (JP)
(74) Representative: Abnett, Richard Charles

(56) References cited:
- EP-A- 0 322 628
- DE-C- 876 386
- GB-A- 1 416 714
- US-A- 1 642 081
- US-A- 3 447 409

## Description

The present invention relates to a paper cutting device, for use in a facsimile machine, copier, printer, or the like for cutting paper discharged from a roll at a predetermined length, and more particularly, to a paper cutting device including an elongate stationary cutter and a movable cutter which is movable along the stationary cutter to thereby cut the paper.

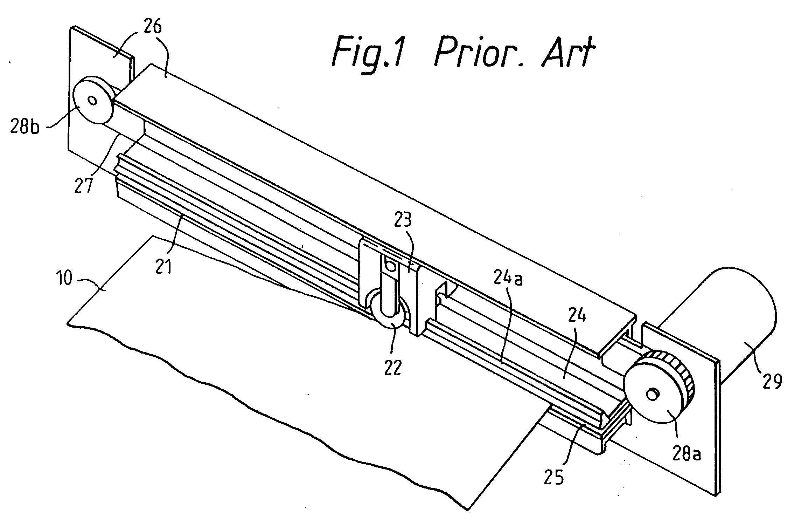

Conventional copiers, printers, facsimile machines and the like include a paper cutting device for cutting paper discharged from a roll page by page. A conventional paper cutting device is illustrated in Fig. 1. Such a device includes an elongated stationary cutter 21 having a stationary cutting edge and a movable cutter 22 having a movable cutting edge and being movable along the stationary cutter while being urged thereagainst so that the cutting edges cooperate to cut the paper. Specifically, a rotary cutting wheel 22 is used as the movable cutter and is positioned so that its peripheral cutting edge slightly overlaps the cutting edge of the stationary cutter 21 thereby cutting the paper as it is discharged from the roll.

The cutting wheel 22 is rotatably held by a carriage 23 which is movable on and along a guide rail 24a of an elongate guide plate 24 disposed parallel to the stationary cutter 21. There is a narrow gap 25 between the elongate guide plate 24 and the stationary cutter 21 in which the paper, discharged from the roll, is inserted to hold the paper while the cutting wheel 22 is moved along the stationary cutter 21.

In order to move the cutting wheel along the guide rail 24a, the carriage 23 is fixed to a wire 27 which is disposed between pulleys 28a and 28b. The pulley 28a is coupled to a motor 29 to transmit a rotation force from the motor 29 to the wire 27. A frame 26 holds the stationary cutter 21, guide plate 24, pulleys 28a, 28b and motor 29, as illustrated in Fig. 1.

The paper is cut in the following manner. As noted above, the paper 10 is inserted into the gap 25 from the back of the frame 26 so that the paper is retained therein during a cutting operation. When the cutting wheel carriage 23 moves from one end of the guide rail 24a to the other end, the cutting wheel 22 in cooperation with the stationary cutter 21 cuts the paper 10.

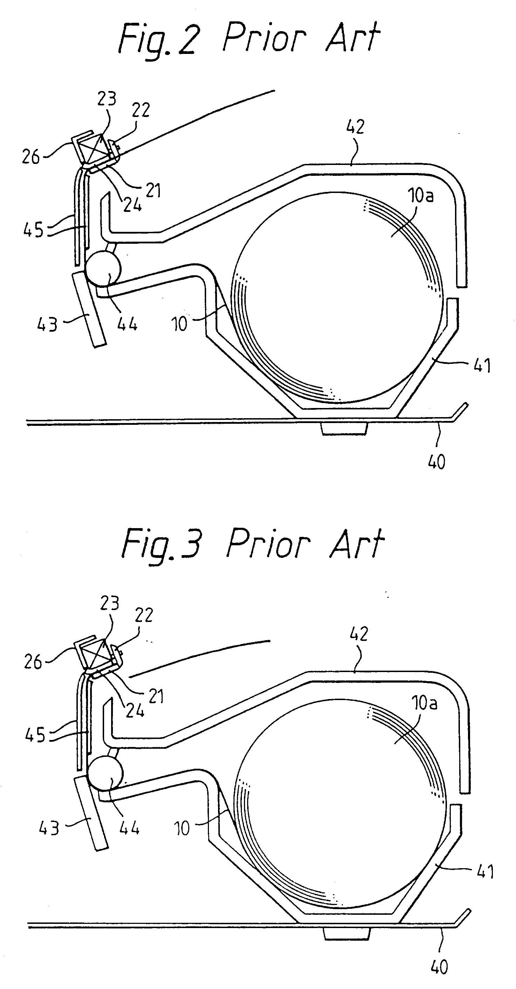

Fig. 2 shows a printing mechanism of a facsimile receiver which uses the conventional paper cutting device of Fig. 1. A thermal sensing paper roll 10a is disposed in a case 41 which is fixed on a base 40. A cover 42 is located over the case 41. A platen roller 44 is coupled to the cover 42 and contacts a thermal head 43 with the paper disposed therebetween so as to record information on the paper 10 discharged from the thermal sensing paper roll 10a. During the printing operation, the platen roller 44 rotates to transmit the paper 10 via paper guide plates 45 into the gap 25 defined by the stationary cutter 21 and the guide plate 24 and the paper is cut, as shown in Fig. 3.

The problem associated with such an arrangement is that when a paper jam occurs in the narrow gap 25, it is extremely difficult to remove the jammed portion of the paper. Furthermore, when a new sheet is installed in the printer or the like, it is difficult and time consuming to hand feed the end of the paper through the narrow gap by hand or using a feed roller.

In more detail, when the paper roll 10a is put in the case 41 after removing the cover 42, the paper 10 has to be inserted between the guide plates 45 and then fed into the gap 25. However, when feeding the paper, the end of the paper 10 is sometimes obstructed at the entrance of the gap 25 because the gap 25 is too narrow. Moreover, when the paper jams in the gap 25, it is difficult to remove the jammed paper from the gap. On the other hand, if the gap 25 is widened in an effort to overcome the above problems associated with inserting the paper and unjamming the paper, the paper cannot be cut properly because the paper 10 floats and tends to curl in the gap during cutting, which causes the paper to jam.

Thus we have appreciated that there is a need for a paper cutting device which allows the paper to be fed through easily without having to be inserted into a narrow gap and which enables any paper jams to be easily corrected.

Another example of a paper cutting device is German Patent DE-C-876386. This document discloses a paper cutting device comprising a stationary cutter and a manually operated movable cutter, wherein the movable cutter and stationary cutter have respective cutting edges which cooperate with each other to cut the paper and a guide member guides the paper towards the cutting position.

A further example of such a cutting device is that disclosed in United States Patent US-A-3447409 which discloses a paper cutter in which a movable cutter cooperates with a stationary cutter to cut paper at a momentaneous cutting position, the movable cutter being mounted on an arm of a movable carriage.

The invention in its various aspects is defined in the independent claim 1 below. Further features of an embodiment of the invention are set forth in the appendant claims.

In the paper cutting device according to the present invention, a plow portion guides the paper to the cutting position without pressing the paper to a stationary cutter, and said movable cutter and said plow portion are disposed proximate to an opposite side of a surface on which moving means are disposed.

An arm has a concave portion through which a cut portion of the paper is fed, to separate the cut portion from the uncut portion.

The invention will now be described by way of example with reference to the accompanying drawings, in which:
Fig. 1 (described above) is a perspective view of a conventional paper cutting device;
Fig. 2 (described above) is a sectional view of a printing device of a facsimile machine which includes the conventional paper cutting device of Fig. 1;
Fig. 3 (described above) is a sectional view showing a cutting operation of the printing device of Fig. 2;
Fig. 4 is a perspective view of a paper cutting device according to a preferred embodiment according to the present invention;
Fig. 5 is a sectional view taken along line 5-5 of Fig. 4;
Fig. 6 is a perspective view of a printing device of a facsimile machine which includes the paper cutting device of Fig. 4;
Fig. 7 is a sectional view of the printing device of Fig. 6;
Fig. 8 is a perspective view showing the positioning of the paper in the printing device of Fig. 6;
Fig. 9 is a perspective view of a paper cutting device according to a second embodiment of the present invention;
Fig. 10 is a sectional view of a printing device of a facsimile machine which includes the paper cutting device of Fig. 9; and
Fig. 11 is a sectional view of the printing device of Fig. 10 after the paper has been positioned in the printing device.

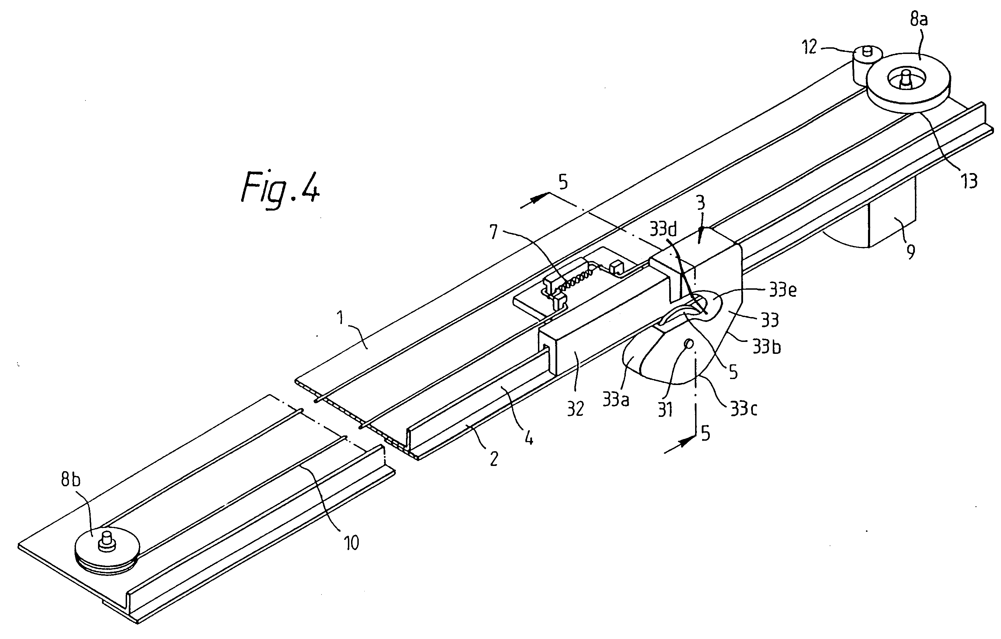

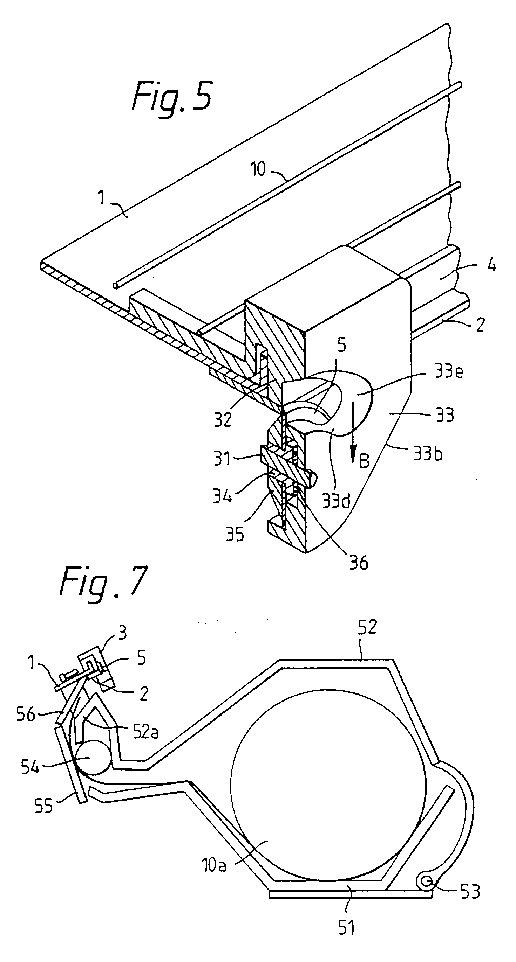

Fig. 4 is a perspective view of a paper cutting device of a preferred embodiment of the present invention and Fig. 5 is sectional view taken along line 5-5 of Fig. 4.

In Fig. 4, an elongate, straight stationary cutter 2 having a cutting edge is positioned on a side portion of a flat cutter frame 1, and is affixed thereto by double sided adhesive tape or similar affixing material so as to extend parallel to the longitudinal direction of the frame 1. An edge of the cutter frame 1 is bent upwardly to form an upright guide rail 4 disposed above the stationary cutting member 2. A carriage 3 is connected to the guide rail 4 by a holder 32 which is slidably disposed on the guide rail 4 so that the carriage can be moved in the longitudinal direction of the stationary cutter 2.

The carriage 3 includes the slidable holder 32 and a generally L-shaped arm 33 secured to the slidable holder 32 and hanging downwardly therefrom. A cutting wheel 5 is rotatably supported thereon and constitutes the movable cutter which, in cooperation with the stationary cutter 2, cuts the paper as described below. The arm 33 includes a front plow portion 33a, rear plow portion 33b and bottom plow portion 33c and defines a curved concave portion 33d illustrated in Fig. 4. The plow portions 33a - 33c are disposed below the stationary cutter 2. A pin 31 is fixed to the arm 33 proximate the plow portions and has a bearing 34 rotatably disposed thereon, as shown in Fig. 5. The cutting wheel 5 is coupled to the bearing 34 so as to be rotatable about the pin 31 via the bearing 34. The edge of the cutting wheel 5 slightly overlaps the cutting edge of the stationary cutter 2.

Referring to Fig. 5, a pressure plate 35 is integrally secured to the cutting wheel 5 so as to be rotatable therewith. The outer edge of the pressure plate 35 is pressed upright against the bottom of the stationary cutting member 2 by the arm 33. When the carriage 3 is moved in a reciprocating motion, a rotational force acts on the cutting wheel 5 due to the friction between the bottom of the stationary cutting member 2 and the pressure plate 35. Thus, the reciprocating motion of the carriage causes the cutting wheel 5 to rotate. A resilient plate 36 is inserted in the pin 31 and the plate 36 pushes the bearing 34 to urge the edge of the cutting wheel 5 to the stationary cutting member 2.

As illustrated in Fig. 4, the front plow portion 33a is disposed forwardly of the cutting position between the stationary cutter 2 and cutting wheel 5 and inclines downwardly. The curved concave portion 33d is located slightly rearwardly of the cutting position and is curved downward. A curved surface 33e, which partially defines the curved concave portion 33d, faces in the direction of arrow B in Fig. 5, and is inclined with respect to the stationary cutter 2. The curved concave portion 33d and the curved surface 33e are provided for the purpose of separating the paper cut at the cutting position between the stationary cutter 2 and the cutting wheel 5 and urging the cut portion of the paper toward the outside of the carriage 3.

A connection portion of the arm 33 for connecting the arm to the moving means 8a, 8b, 9, 10 is disposed on the other side of the movable cutter 5 seen in a direction parallel to the stationary cutting edge, and has a slot with a curved inner surface 33e merging with the surface of the plow portion at a location of the movable cutting edge, the slot being concave in such manner that it widens in a direction parallel to the first surface and perpendicular to the stationary cutting edge.

Referring again to Fig. 4, two pulleys 8a and 8b are mounted on opposite ends of the cutter frame 1 in the longitudinal direction of the stationary cutter 2. The pulley 8a is rotated by a motor 9 via a pinion gear 12 mounted on an output shaft of the motor 9 and a gear 13. A wire 10 circumscribes the pulleys 8a and 8b and is held under tension by a coil spring 7 to serve as a medium for driving the cutting wheel carriage 3. The slidable holder 32 of the carriage 3 is connected to the wire 10 at a predetermined position. When the motor 9 is energized, the rotation of the motor 9 is transmitted to the pulley 8a via the pinion gear 12 and gear 13. As a result, the pulley 8a causes the wire 10 and, therefore, the carriage 3 to reciprocate back and forth along the guide rail 4.

The pulleys 8a, 8b, the motor 9 and wire 10 comprise moving means disposed on the second surface. The movable cutter is substantially disposed on the same side of the first surface as the plow portion and overlapping with the stationary cutting edge at the momentaneous cutting position for cooperation with the stationary cutting edge to cut the paper.

The following is an explanation of the operation of the cutting device. First, the carriage 3 is located at a home position which is located at the right-hand side (motor side) of the cutter frame 1. Paper (not shown) is fed under the cutter frame 1 to the stationary cutting member 2. When the carriage 3 moves from the home position and the stationary cutter 2 and rotary cutting wheel 5 start to cut the paper, the front plow portion 33a guides the edge of the paper toward the cutting position where the stationary cutter 2 and cutting wheel 5 overlap. After the paper is cut at the cutting position, the cut paper is passed through the curved concave portion 33d so that it contacts the curved surface 33e and is fed outwardly of the arm 33. As soon as the carriage 3 reaches the leftmost point on the cutter frame, the motor 9 is reversed to move the wire 10 in the opposite direction. Consequently, the carriage 3 is returned to the home position. At this instant, the rear plow portion 33b and bottom plow portion 33c push the cut sheet downwardly to prevent the cut paper from jamming during the return movement of the carriage 3.

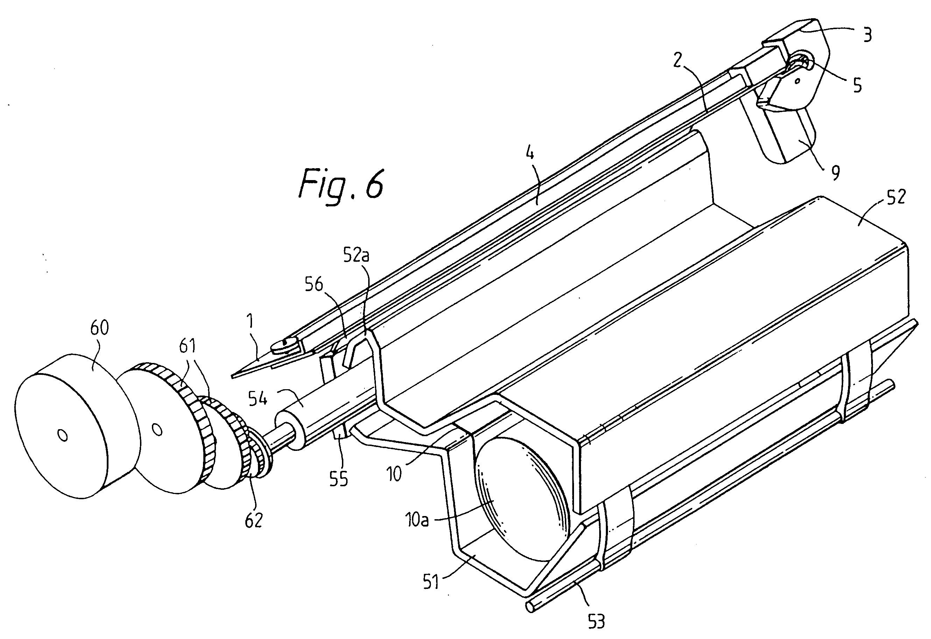

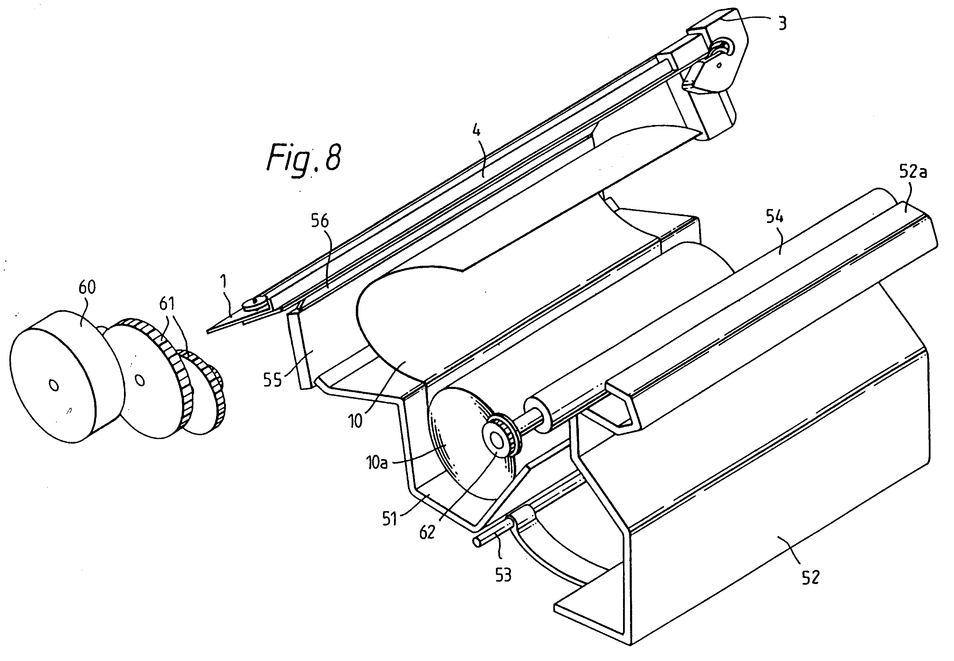

Fig. 6 is a perspective view of a printing device used in a facsimile machine which includes the paper cutting device of Fig. 4, and Fig. 7 is a sectioned view of the printing device of Fig. 6.

The thermal sensing paper roll 10a is disposed in a case 51. A cover 52 is located over the case 51, and one end of the cover 52 is connected to a bar 53 so that the cover 52 can pivot about the bar 53 between opened and closed positions. A platen roller 54 is coupled to the cover 52 and rotates under the cover 52. Although a coupling mechanism between the platen roller 54 and the cover 52 is not shown in the Figures, various support members and bearings are used as the coupling mechanism. The specific construction of the coupling mechanism would be obvious to a person of ordinary skill in the art.

The platen 54 presses the paper unwound from the paper roll 10a against a thermal head 55 to record or print information on the paper and transmits the paper 10 to a guide plate 56. One end of the platen roller 54 is provided with a gear 62 which is rotated by a motor 60 via gears 61. The guide plate 56 faces a guide portion 52a of the cover 52 to guide the paper 10 under the cutter frame 1, as best illustrated in Fig. 7.

When the paper roll 10a is positioned in the case 51, the disk head carriage 3 is disposed in the home position and the cover 52 along with the platen roller 54 is pivoted to an opened position as shown in Fig. 8. After the paper 10 is discharged from the roll 10a, the cover 52 is closed and the gear 62 is engaged with a gear 61. Then, a cutting operation is performed to cut an end portion of the paper 10. During the cutting operation, the front plow portion 33a of the arm 33 guides the side edge of the paper 10 to the cutting position between the stationary cutter 2 and cutting wheel 5 as described above. Therefore, it is not necessary to retain the paper 10 in a narrow gap, as in the conventional arrangement. This prevents the paper 10 from jamming in the cutting device. Further, even if the paper does jam, it is easy to remove the jammed paper by simply opening the cover 52.

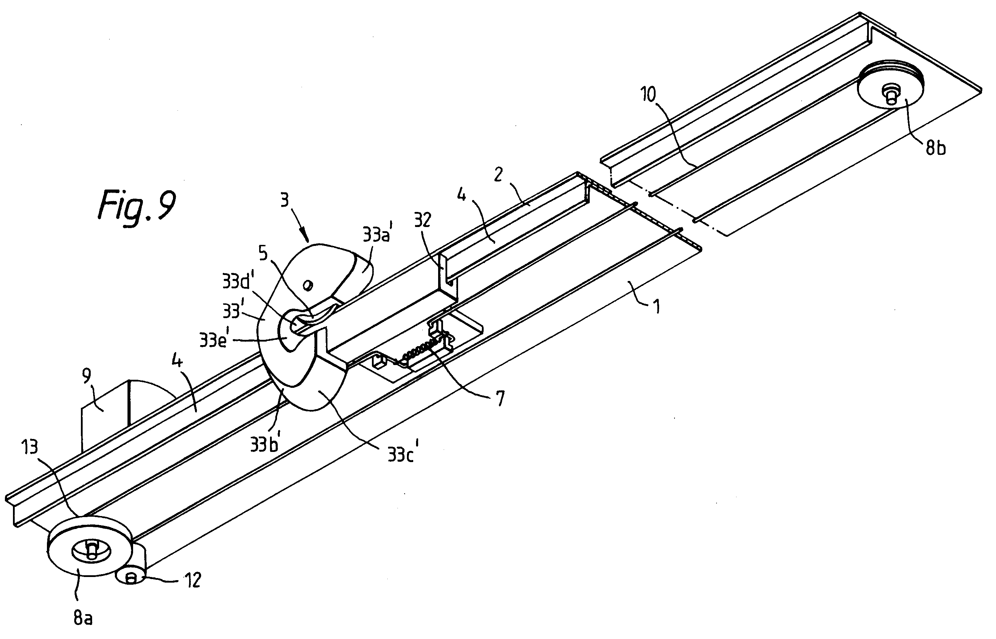

Fig. 9 shows a paper cutting device according to another embodiment of the present invention. The only difference between the paper cutting device of Fig. 9 and the paper cutting device of Fig. 4 is the shape of the cutting wheel carriage 3 and 3' and the manner in which it is operated. When the cutting device of Fig. 4 is used, paper is supplied from below the cutter frame 1 and the cut paper falls below the cutting frame 1 as shown in Figs. 6 to 8. On the other hand, when the cutting device of Fig. 9 is used, paper is supplied from above the cutter frame 1 and the cut paper falls below the cutting frame 1. Therefore, in the cutting device of Fig. 9, the front plow portion 33a' of the arm 33' is positioned above the stationary cutter 2, and the rear plow portion 33b' and the bottom plow portion 33c' of the arm 33' are positioned below the stationary cutter 2. Each of the plow portions in Fig. 4 and Fig. 9 performs the same function.

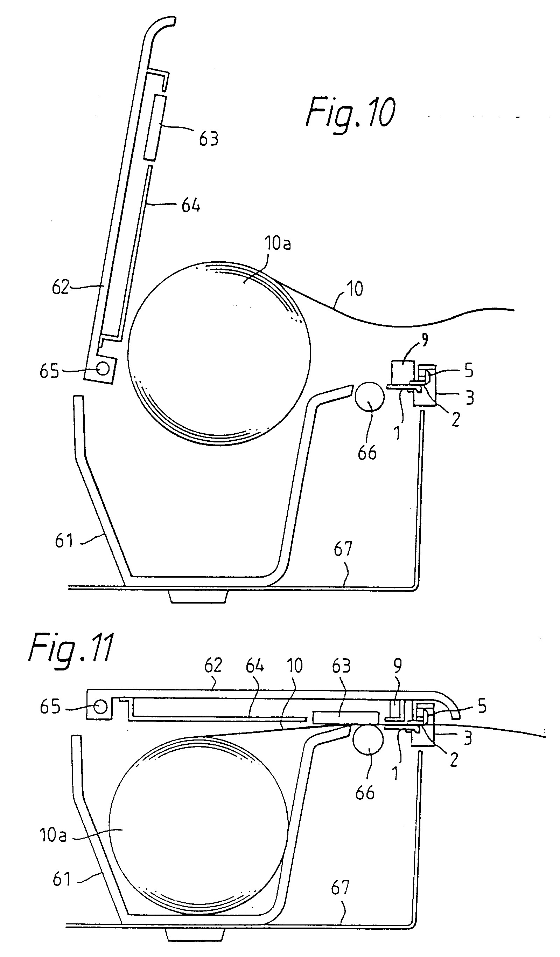

Fig. 10 and Fig. 11 show a printing mechanism for a facsimile machine which uses the cutting device of Fig. 9.

A thermal sensing paper roll 10a is placed in a case 61 which is fixed on a housing 67. A cover 62 is disposed on the case 61 and rotates about an axis 65 between opened and closed positions. A thermal head 63 is disposed inside the cover 62 and is supported by support 64. When the cover 62 is closed as shown in Fig. 11, the thermal head 63 contacts a platen roller 66 which is located between the upper part of the case 61 and the cutting device. The paper 10 discharged from the paper roll 10a is nipped between the thermal head 63 and the platen roller 66, and then fed along the cutter frame 1 of the cutting device. Before the cutting operation, the carriage 3' is disposed at the home position on the motor side. Then the carriage 3', with the cutting wheel 5, moves along the stationary cutter 2 to cut the paper 10. Since the edge of the paper 10 is guided toward the cutting position by the front plow portion 33a', the cutting operation is performed without experiencing paper jam. Also the curved concave portion 33d' and the curved surface 33e' separate the cut paper from the arm 33' in the same manner discussed above. When the carriage 3' reaches the opposite end from the home position, it returns to the home position and plow portion 33b' and bottom plow portion 33c' urge the cut paper downwardly.

In the above embodiments, a moving device for moving the carriage 3 or 3' in a reciprocating motion along the guide rail 4 is implemented by the wire 10 passing over the two pulleys at longitudinal opposite ends of the stationary cutter 2. If desired, the pulleys and the wire 10 may be replaced with gears and a timing belt, respectively. Alternatively, the pulleys and the wire 10 may be replaced with a screw gear shaft which is disposed parallel to the stationary cutter 2. When the screw gear shaft is used as the moving device, the carriage 3 is coupled to the screw gear shaft via a coupling gear and is moved by rotating the screw gear shaft. This mechanism is used in a moving device for moving a printer head carriage.

Also, although the preferred embodiment uses a rotary cutting wheel 5 as the movable cutter, other rotatable movable cutters may be used.

## Claims

1. A paper cutting device for cutting paper comprising a stationary cutter (2) having a first surface and a second surface opposite to it and a stationary cutting edge being provided at one side of said first surface at its periphery;
a movable cutter (5) movable along said stationary cutter (2) and having a movable cutting edge for cooperating with said stationary cutting edge to cut said paper at a cutting position;
a movable carriage (3) which includes an arm (33), said arm disposed in front of the cutting edge of the said stationary cutter (2), substantially outside of the periphery of said first surface, and rotatably supporting said movable cutter; and
moving means (8a, 8b, 9, 10) for moving said movable carriage (3) along said stationary cutter (2), the moving means being disposed on said stationary cutter (2) and connected to said carriage (3) by means of a connecting portion of said arm (33), the connecting portion having a slot extending from the movable cutter (5) in a direction substantially parallel to the stationary cutting edge,
characterised in that;
said arm (33) of said movable carriage has a plow portion (33a) formed thereon for guiding said paper to the cutting position;
said plow portion (33a) is disposed beyond a plane defined by said first surface seen in direction from said second to said first surface, and at a side of said movable cutter, seen in direction parallel to said stationary cutting edge, which is opposite to the location of the connecting portion of said arm (33), the slot of the connecting portion of the arm having a slot with a curved inner surface (33e) merging with the surface of said plow portion at a location adjacent said movable cutting edge, said slot being concave in such manner that it widens in direction parallel to said first surface and perpendicular to, and away from, said stationary cutting edge,
said moving means (8a,8b,9,10) is disposed on said second surface, and said movable cutter (5) is substantially disposed on the same side of said first surface as said plow portion (33a) and overlapping with said stationary cutting edge at the momentaneous cutting position for cooperation with said stationary cutting edge to cut the paper.

2. A paper cutting device as claimed in claim 1 wherein said plow portion is a first plow portion (33a) and said arm further comprises a second plow portion (33b) disposed near the bottom of said arm for urging a cut portion of said paper from a remaining portion of said paper upon a return stroke of said carriage.

3. A paper cutting device as claimed in claim 2, wherein said first plow portion (33a) and said second plow portion (33b) of said arm are located below said stationary cutter (2).

4. A paper cutting device as claimed in claim 2, wherein said first plow portion (33a) and said second plow portion (33b) of said arm are located on opposite sides with respect to said movable cutter (5).

5. A paper cutting device as claimed in any of claims 1 to 4, wherein said movable cutter is a rotary cutting wheel (5) which is rotatably held by said arm (33).

6. A paper cutting device as claimed in claim 5, further comprising rotating means (35) for rotating said cutting wheel in response to movement of said carriage by said moving means.

7. A paper cutting device as claimed in claim 6, wherein said rotating means includes a pressure wheel (35) integral to said cutting wheel (5) and disposed such that a peripheral edge of said pressure wheel is urged against said stationary cutter (2).

8. A paper cutting device as claimed in any preceding claim, further comprising a cutter frame (1) to which said stationary cutter (2) and said moving means (8a,8b,9,10) are secured.

9. A paper cutting device as claimed in claim 8, wherein said cutter frame (1) has a guide (4) constructed parallel to said stationary cutter for guiding said movable carriage.

10. A paper cutting device as claimed in any preceding claim, wherein said moving means comprises a pair of pulleys (8a,8b) coupled to said cutter frame (1), a wire (10) held between said pulleys, and drive means (9) for rotating one of said pulleys so as to move said wire, said movable carriage (3) being fixed to said wire.

## Patentansprüche

1. Papierschneidgerät zum Abschneiden von Papier, das aufweist: einen ortsfesten Schneider (2), der eine erste Oberfläche und eine zweite ihr gegenüberliegende Oberfläche und eine ortsfesten Schneidkante hat, die an einer Seite der ersten Oberfläche an ihrer Außenseite vorgesehen ist;
einen beweglicher Schneider (5), der entlang dem ortsfesten Schneider (2) beweglich ist und eine bewegliche Schneidkante zum Zusammenwirken mit der ortsfesten Schneidkante hat, um das Papier an einer Schneidposition abzuschneiden;
einen beweglichen Wagen (3), der einen Arm (33) umfaßt, wobei dieser Arm vor der Schneidkante des ortsfesten Schneiders (2) im wesentlichen außerhalb des Umfangs der ersten Oberfläche angeordnet ist und den beweglichen Schneider drehbar hält; und
eine Bewegungseinrichtung (8a, 8b, 9, 10) zum Bewegen des beweglichen Wagens (3) entlang dem ortsfesten Schneider (2), die auf dem ortsfesten Schneider (2) angeordnet und mit Hilfe eines Verbindungsteils des Arms (33) mit dem Wagen (3) verbunden ist, wobei der Verbindungsteil einen Schlitz hat, der sich von dem beweglichen Schneider (5) aus erstreckt, dadurch gekennzeichnet, daß
der Arm (33) des beweglichen Wagens einen Abstreichteil (33a) darauf ausgebildet hat, um das Papier zu der Schneidposition zu führen;
der Abstreichteil (33a) jenseits einer Ebene, die in Richtung von der zweiten zur ersten Oberfläche gesehen von der ersten Oberfläche begrenzt wird, und in Richtung parallel zu der ortsfesten Schneidkante gesehen an einer Seite des beweglichen Schneiders angeordnet ist, die entgegengesetzt zum Ort des Schlitzes des Verbindungsteils des Arms (33) ist, wobei der Schlitz des Verbindungsteils des Arms einen Schlitz mit einer gekrümmten inneren Oberfläche (33e) hat, die an einer zur beweglichen Schneidkante benachbarten Stelle in die Oberfläche des Abstreichteils übergeht, wobei der Schlitz auf eine derartige Weise konkav ist, daß er in zur ersten Oberfläche paralleler Richtung und senkrecht und von der ortsfesten Schneidkante weg breiter wird,
die Bewegungseinrichtung (8a, 8b, 9, 10) auf der zweiten Oberfläche angeordnet ist und der bewegliche Schneider (5) im wesentlichen auf der gleichen Seite der ersten Oberfläche wie der Abstreichteil (33a) angeordnet ist und mit der ortsfesten Schneidkante an der momentanen Schneidposition überlappt, um mit der ortsfesten Schneidkante zusammenzuarbeiten, um das Papier abzuschneiden.

2. Papierschneidgerät nach Anspruch 1, wobei der Abstreichteil ein erster Abstreichteil (33a) ist und der Arm ferner einen zweiten Abstreichteil (33b) aufweist, der nahe der Unterseite des Arms angeordnet ist, um nach einem Rückweg des Wagens einen abgeschnittenen Teil des Papiers von einem restlichen Teil des Papiers weg zu drücken.

3. Papierschneidgerät nach Anspruch 2, wobei der erste Abstreichteil (33a) und der zweite Abstreichteil (33b) des Arms sich unterhalb des ortsfesten Schneiders (2) befinden.

4. Papierschneidgerät nach Anspruch 2, wobei der erste Abstreichteil (33a) und der zweite Abstreichteil (33b) des Arms sich relativ zum beweglichen Schneider (5) auf entgegengesetzten Seiten befinden.

5. Papierschneidgerät nach einem der Ansprüche 1 bis 4, wobei der bewegliche Schneider ein drehbares Rundmesser (5) ist, das von dem Arm (33) drehbar gehalten wird.

6. Papierschneidgerät nach Anspruch 5, das ferner eine Dreheinrichtung (35) aufweist, um das Rundmesser ansprechend auf die Bewegung des Wagens durch die Bewegungseinrichtung zu drehen.

7. Papierschneidgerät nach Anspruch 6, wobei die Dreheinrichtung (35) ein Druckrad (35) umfaßt, das integral mit dem Rundmesser (5) ist und derart angeordnet ist, daß eine Umfangskante des Druckrads gegen den ortsfesten Schneider (2) gedrückt wird.

8. Papierschneidgerät nach irgendeinem der vorstehenden Ansprüche, das ferner einen Schneidrahmen (1) aufweist, an dem der ortsfeste Schneider (2) und die Bewegungseinrichtung (8a, 8b, 9, 10) befestigt sind.

9. Papierschneidgerät nach Anspruch 8, wobei der Schneidrahmen (1) eine Führung (4) hat, die parallel zum ortsfesten Schneider aufgebaut ist, um den beweglichen Wagen zu führen.

10. Papierschneidgerät nach irgendeinem der vorstehenden Ansprüche, wobei die Bewegungseinrichtung ein Paar mit dem Schneidrahmen (1) verbundene Rillenscheiben (8a, 8b), einen zwischen den Rillenscheiben gehaltenen Draht (10) und eine Antriebseinrichtung (9) zum Drehen einer der Rillenscheiben, um den Draht zu bewegen, aufweist, wobei der bewegliche Wagen (3) an dem Draht befestigt ist.

## Revendications

1. Dispositif de coupe pour papier comprenant une lame fixe (2) présentant une première surface et une seconde surface opposée à la première, et un bord de coupe fixe étant prévu sur un côté de ladite première surface à sa périphérie ;
une lame mobile (5) pouvant se déplacer le long de ladite lame fixe (2) et présentant un bord de coupe mobile destiné à coopérer avec ledit bord de coupe fixe pour couper ledit papier au niveau d'une position de coupe ;
un chariot mobile (3) qui comprend un bras (33), ledit bras disposé devant le bord de coupe de ladite lame fixe (2) sensiblement à l'extérieur de la périphérie de ladite première surface, et supportant en rotation ladite lame mobile ; et
des moyens de déplacement (8a, 8b, 9, 10) destinés à déplacer ledit chariot mobile (3) le long de ladite lame fixe (2), les moyens de déplacement étant disposés sur ladite lame fixe (2) et reliés audit chariot (3) au moyen d'une partie de liaison dudit bras (33), la partie de liaison comportant une fente qui s'étend depuis la lame mobile (5), caractérisé en ce que :
ledit bras (33) dudit chariot mobile possède une partie de soc (33a) formée sur celui-ci afin de guider ledit papier vers la position de coupe ;
ladite partie de soc (33a) est disposée au-delà d'un plan défini par ladite première surface vu dans le sens allant de ladite seconde à ladite première surface, et au niveau d'un côté de ladite lame mobile, vu dans une direction parallèle audit bord de coupe fixe, qui est opposé à l'emplacement de la partie de liaison dudit bras (33) comportant une fente avec une surface intérieure incurvée (33e) qui rejoint la surface de ladite partie de soc en un emplacement adjacent audit bord de coupe mobile, ladite fente étant concave, si bien qu'elle s'élargit dans une direction parallèle à ladite première surface et perpendiculaire audit bord de coupe fixe et en s'éloignant de celui-ci,
lesdits moyens mobiles (8a, 8b, 9, 10) sont disposés sur ladite seconde surface, et ladite lame mobile (5) est sensiblement disposée du même côté de ladite première surface que ladite partie de soc (33a) et en chevauchement avec ledit bord de coupe fixe au niveau de la position de coupe momentanée pour permettre la coopération avec ledit bord de coupe fixe pour couper le papier.

2. Dispositif de coupe pour papier selon la revendication 1, dans lequel ladite partie de soc est une première partie de soc (33a) et ledit bras comprend en outre une seconde partie de soc (33b) disposée à côté du bas dudit bras pour pousser une partie coupée dudit papier depuis une partie restante dudit papier lors d'une course arrière dudit chariot.

3. Dispositif de coupe pour papier selon la revendication 2, dans lequel ladite première partie de soc (33a) et ladite seconde partie de soc (33b) dudit bras sont situées au-dessous de ladite lame fixe (2).

4. Dispositif de coupe pour papier selon la revendication 2, dans lequel ladite première partie de soc (33a) et ladite seconde partie de soc (33b) dudit bras sont situées sur des côtés opposés par rapport à ladite lame mobile (5).

5. Dispositif de coupe pour papier selon l'une quelconque des revendications 1 à 4, dans lequel ladite lame mobile est un disque de coupe rotatif (5) qui est soutenu en rotation par ledit bras (33).

6. Dispositif de coupe pour papier selon la revendication 5, comprenant en outre des moyens de rotation (35) destinés à mettre en rotation ledit disque de coupe en réponse au déplacement dudit chariot par lesdits moyens de déplacement.

7. Dispositif de coupe pour papier selon la revendication 6, dans lequel lesdits moyens de rotation comprennent un disque presseur (35) solidaire dudit disque de coupe (5) et disposé de telle manière qu'un bord périphérique dudit disque presseur soit poussé contre ladite lame fixe (2).

8. Dispositif de coupe pour papier selon l'une quelconque des revendications précédentes, comprenant en outre un cadre de lames (1) auquel sont fixés ladite lame fixe (2) et lesdits moyens de déplacement (8a, 8b, 9, 10).

9. Dispositif de coupe pour papier selon la revendication 8, dans lequel ledit cadre de lames (1) possède un guide (4) construit parallèle à ladite lame fixe pour guider ledit chariot mobile.

10. Dispositif de coupe pour papier selon l'une quelconque des revendications précédentes, dans lequel lesdits moyens de déplacement comprennent deux poulies (8a, 8b) couplées audit cadre de lames (1), un câble (10) tendu entre lesdites poulies, et des moyens d'entraînement (9) pour mettre en rotation l'une desdites poulies de manière à déplacer ledit câble, ledit chariot mobile (3) étant fixé audit câble.
